# EUROPÄISCHE PATENTSCHRIFT

(11) **EP 2 095 656 B1**
(45) Veröffentlichungstag und Bekanntmachung des Hinweises auf die Patenterteilung: **14.11.2012**
(21) Anmeldenummer: 07818521.2
(22) Anmeldetag: 27.09.2007
(51) Int. Cl.: H04W 24/00

(54) **Verfahren und Messsystem zum Messen und Testen eines Mobilfunk-Endgeräts**
Method and measuring system for measuring and testing a mobile radio terminal
Procédé et système de mesure pour mesurer et tester un terminal de téléphonie mobile

(30) Priorität: 27.10.2006 DE 102006050872
(43) Veröffentlichungstag der Anmeldung: 02.09.2009
(73) Patentinhaber: Rohde & Schwarz GmbH & Co. KG, 81671 München (DE)
(72) Erfinder: MICHL, Andreas, 81673 München (DE); SCHUMACHER, Adrian, 81541 München (DE)
(74) Vertreter: Körfer, Thomas
(86) Internationale Anmeldenummer: PCT/EP2007/008438
(87) Internationale Veröffentlichungsnummer: WO 2008/049498

(56) Entgegenhaltungen:
- EP-A- 1 696 682
- THE DEFENSE ADVANCED RESEARCH PROJECTS AGENCY (DARPA) NETWORKING IN EXTREME ENVIRONMENTS (NETEX) PROGRAM: "Test Master Plan for the NETEX program" INTERNET CITATION, [Online] 15. August 2002 (2002-08-15), XP002333378 Gefunden im Internet: URL:http://www.mprg.org/people/buehrer/ult ra/pdfs/DARPA%20NETEX%20TEST%20 PLAN.pdf> [gefunden am 2005-06-24]
- "Recommended Minimum Performance Standards for cdma2000 Spread Spectrum Base Stations" 3RD GENERATION PARTNERSHIP PROJECT 2 3GPP2, XX, XX, [Online] 14. Januar 2005 (2005-01-14), Seiten 1-152, XP002333380 Gefunden im Internet: URL:http://www.3gpp2.org/Public_html/specs /C.S0010-C_V1.0_050120.pdf> [gefunden am 2005-06-23]
- ROHDE & SCHWARZ GMBH & CO KG: "How to do Measurements according to TS 34.121 in presence of the HS-DPCCH with the R&S CMU200" INTERNET CITATION, [Online] November 2005 (2005-11), Seiten 1-20, XP007904016 Gefunden im Internet: URL:http://www.rohde-schwarz.nl/www/dev_ce nter.nsf/frameset?OpenAgent&web site=com&navig=/www/dev_center.nsf/html/na v,10,11&content=/appnote/1C M62.html> [gefunden am 2008-02-06]

## Beschreibung

Die Erfindung betrifft ein Verfahren und ein Messsystem zur Messung von Leistung und Qualität eines Mobilfunk-Endgeräts (UE).

In der Nachfolge von GSM, GPRS und UMTS treten nun HSDPA (High Speed Downlink Packet Access) und UMTS LTE (Long Term Evolution) als neueste Entwicklungen im Bereich mobiler Funkkommunikation hervor. Das Ziel von HSDPA und UMTS LTE ist die Optimierung des UMTS-Systems im Hinblick auf die Unterstützung von Datendiensten. UMTS bietet bereits schnelle Datendienste, wie etwa die Übertragung von Videodaten mit hoher Qualität bei einer Rate von 384 kbit/s.

Hierauf aufbauend verwenden HSDPA und UMTS LTE neue Technologien, die Datenraten von bis zu 14 Mbit/s erlauben und die ferner die Kapazität des Mobilkommunikationsnetzwerkes als solchem erhöhen. Als Ergebnis können Mobilfunkbetreiber ihren Kunden verbesserte Multimediadienste anbieten.

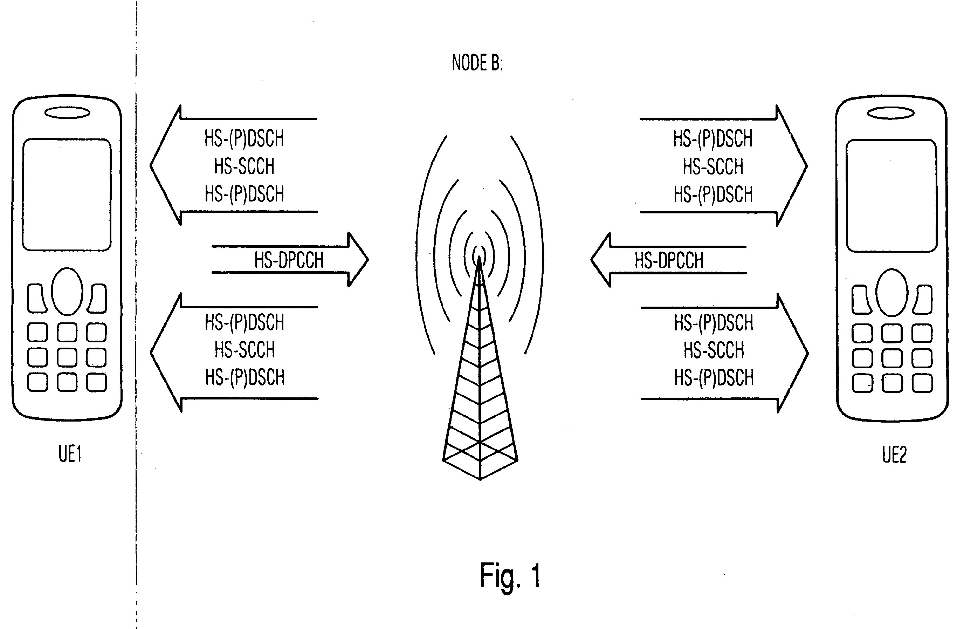

In Fig. 1 ist eine schematische Darstellung der HDSPA-Technologie, insbesondere der in HDSPA verwendeten logischen (und physischen) Kanäle, gezeigt. Bedeutsam ist die Einführung eines neuen Übertragungskanals für Nutzerdaten, des sog. High-Speed (Physical) Downlink Shared Channel, HS-(P) DSCH. Verschiedene Nutzer teilen sich die Ressourcen der Luft-Schnittstelle (Air Interface), die auf diesem Kanal verfügbar sind. Ein intelligenter Algorithmus in der Node B entscheidet, welcher Teilnehmer ein Datenpaket zu welcher Zeit erhält.

Diese Entscheidung wird den Teilnehmern über einen parallelen Signal-Kanal mitgeteilt, den sog. High-Speed Shared Control Channel, HS-SCCH. Im Unterschied zu UMTS, wo ein neues Datenpaket höchstens alle 10 ms übertragen werden kann, kann bei HSDPA alle 2 ms eine Paketübertragung stattfinden.

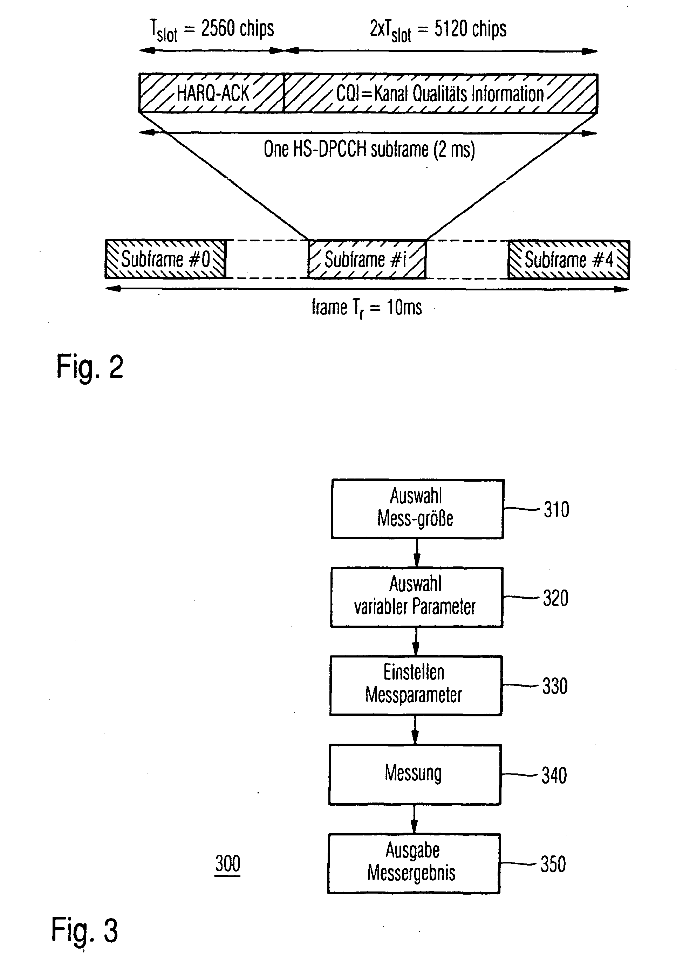

Rückmeldungen der Nutzer über die Kanalqualität wie auch Paketbestätigungen oder negative Bestätigungen werden im Uplink auf dem sog. High Speed - Dedicated Physical Control Channel, HS-DPCCH, bereit gestellt. Der HS-DPCCH ist ein physischer Uplink-Kanal, der zur Übermittlung von Steuer- oder Kontrollinformationen verwendet wird: HARQ ACK/NACK und Kanalqualitätsinformation. Fig. 2 zeigt eine schematische Darstellung der Struktur des HS-DPCCH.

Die Kanalqualitätsinformation besteht aus dem sog. CQI-Wert, welcher sich auf die CQI-Tabellen bezieht, die in der 3GPP-Spezifikation TS 25.214 ("Physical layer procedures") beschrieben sind. Es existieren verschiedene Tabellen für verschiedene Kategorien von Endgeräten (UE), abhängig von der Komplexität der Implementierung des UE. Zum Beispiel zeigt Tabelle 1 die CQI-Tabelle für die UE-Kategorien 1 bis 6.

**Tabelle 1 CQI-Mapping-Tabelle für UE-Kategorien 1 bis 6**

| **CQI value** | **Transport Block Size** | **Number of HS-PDSCH** | **Modulation** | **Reference power adjustment □** | **NIR** | **XRV** |
|---|---|---|---|---|---|---|
| 0 | N/A | Out of range | | | | |
| 1 | 137 | 1 | QPSK | 0 | 9600 | 0 |
| 2 | 173 | 1 | QPSK | 0 | | |
| 3 | 233 | 1 | QPSK | 0 | | |
| 4 | 317 | 1 | QPSK | 0 | | |
| 5 | 377 | 1 | QPSK | 0 | | |
| 6 | 461 | 1 | QPSK | 0 | | |
| 7 | 650 | 2 | QPSK | 0 | | |
| 8 | 792 | 2 | QPSK | 0 | | |
| 9 | 931 | 2 | QPSK | 0 | | |
| 10 | 1262 | 3 | QPSK | 0 | | |
| 11 | 1483 | 3 | QPSK | 0 | | |
| 12 | 1742 | 3 | QPSK | 0 | | |
| 13 | 2279 | 4 | QPSK | 0 | | |
| 14 | 2583 | 4 | QPSK | 0 | | |
| 15 | 3319 | 5 | QPSK | 0 | | |
| 16 | 3565 | 5 | 16-QAM | 0 | | |
| 17 | 4189 | 5 | 16-QAM | 0 | | |
| 18 | 4664 | 5 | 16-QAM | 0 | | |
| 19 | 5287 | 5 | 16-QAM | 0 | | |
| 20 | 5887 | 5 | 16-QAM | 0 | | |
| 21 | 6554 | 5 | 16-QAM | 0 | | |
| 22 | 7168 | 5 | 16-QAM | 0 | | |
| 23 | 7168 | 5 | 16-QAM | -1 | | |
| 24 | 7168 | 5 | 16-QAM | -2 | | |
| 25 | 7168 | 5 | 16-QAM | -3 | | |
| 26 | 7168 | 5 | 16-QAM | -4 | | |
| 27 | 7168 | 5 | 16-QAM | -5 | | |
| 28 | 7168 | 5 | 16-QAM | -6 | | |
| 29 | 7168 | 5 | 16-QAM | -7 | | |
| 30 | 7168 | 5 | 16-QAM | -8 | | |

Die regelmäßig durch das Endgerät (UE) gemeldeten CQI-Werte werden durch die Node B als Vorschlag gewertet, wie der HS-(P)DSCH zu formatieren ist. Mit diesem Format setzt das Endgerät (UE) die sich ergebende Blockfehlerrate des HS-DSCH als unter 0,1 liegend voraus. Je höher der CQI-Wert, desto anspruchsvoller ist das Übertrangungsformat des HS-DSCH, d.h. desto besser muss die Qualität der Funkverbindung sein.

Zum Beispiel, wenn das Endgerät (UE) einen CQI-Wert von 14 gemäß Tabelle 1 meldet, schlägt es ein HS-(P)DSCH-Format mit Übertragungsblockgröße 2583 Bits, 4 Kanälen und QPSK-(Quadratur Phase Shift Keying)-Modulation vor. Wenn ein HS-(P)DSCH derart formatiert wird, wird die Übertragungsblock-Fehlerrate des HS-DSCH als unter 0,1 liegend geschätzt. Sollte die Node B den Vorschlag des Endgeräts (UE) ignorieren und ein Übertragungsformat mit höheren Anforderungen gemäß einem höheren CQI-Wert auswählen, würde sehr wahrscheinlich eine höhere Übertragungsblock-Fehlerrate auf dem HS-DSCH auftreten. Daher sollte die Node B idealerweise ein Übertragungsformat gemäß der Empfehlung des Endgeräts (UE) auswählen.

Die Wahl von Kanalcodierung und Modulationsverfahren in Abhängigkeit von der Übertragungsqualität wird auch unter der Bezeichnung "Adaptives Modulations- und Kodierungsverfahren" (AMC) zusammengefasst.

Um eine robuste Datenübertragung sicherzustellen, verwendet HSDPA ferner ein sog. HARQ-(Hybrid Automatic Repeat Request)-Protokoll. Wenn ein Endgerät (UE) ein fehlerhaftes Datenpaket empfängt, fordert es das Datenpaket abermals an. Bei Wiederholung der Paketübertragung kann die Node B eine andere Art der Kodierung wählen, welche dem Teilnehmer einen besseren Empfang erlaubt (inkrementelle Redundanz). Diese Art der Kodierung wird in der Fachsprache als "redundancy and constellation version" bezeichnet, oder kurz, als "redundancy version" (RV version) bzw. Redundanzart. Wenn ein Paket an das Endgerät (UE) übermittelt wurde, muss die Node B warten, bis eine Bestätigung (ACK) oder eine negative Bestätigung (NACK) für dieses Paket empfangen wurde (sog. 'Stop-and-wait'-Übertragungsmechanismus). In der Zwischenzeit kann die Node B über andere HARQ-Prozesse weitere Datenpakete an dieses Endgerät (UE) übertragen. Ein Endgerät muss bis zu 8 parallele HARQ-Prozesse unterstützen, die äquivalent zu bis zu 8 unabhängigen HARQ 'Stop-and-wait'-Übertragungsmechanismen sind.

Ferner sind Verfahren zur Nutzung mehrerer Antennen pro Sender und/oder Empfänger (Multiple Input Multiple Output oder MIMO) bekannt und im Rahmen von HSDPA grundsätzlich einsetzbar, welche die sog. Raumdiversity, bei der (identische) Antennen in gewissem Abstand zueinander aber mit gleicher Ausrichtung montiert werden, und/oder die Polarisationsdiversity, bei der zwei Antennen mit einem Winkelunterschied von 90° zueinander montiert werden, ausnutzen, um Interferenzeffekte bei der Funkübertragung zu reduzieren und den Spitzendurchsatz (peak throughput) mittels Code-Reuse zu erhöhen. Für Einzelheiten wird auf den technischen Report "Physical layer aspects of UTRA High Speed Downlink Packet Access" (3GPP-Spezifikation 3GPP TR 25.848) verwiesen.

Das Dokument EP 1 696 682 A1 offenbart ein Verfahren, um die Messzeit für die Bestimmung der HF-Empfindlichkeit eines CDMA-Empfängers zu verkürzen. Das Dokument lehrt, dass die Empfänger-Empfindlichkeit üblicherweise anhand der gemessenen Rahmenfehlerrate (FER) in Abhängigkeit vom HF-Signalpegel ermittelt wird. Darüber hinaus wird vorgeschlagen, zunächst die Beziehung zwischen einer neu gewählten Messgröße, z.B. der korrelierten Energie (oder Ec/lo) und der FER zu bestimmen. Anschließend wird die Empfängerempfindlichkeit anhand von Messungen der korrelierten Energie (oder Ec/Io) ermittelt.

Der Aufbau eines HSDPA- bzw. UMTS LTE-fähigen Netzes erfordert besondere Test- und Messlösungen. Insbesondere sind Test- und Messlösungen erforderlich, die Aufschlüsse über eine möglicherweise fehlerhafte Anpassung der verwendeten Endgeräte (Clipping) oder deren generelle Fehlerhaftigkeit zulassen, über eine fehlerhafte Implementierung sowie über die Ressourceneffizienz der verwendeten Geräte (Performance).

Aufgabe der vorliegenden Erfindung ist es daher, ein Messverfahren und ein Messsystem anzugeben, welches die genannten Informationen bereitstellt.

Diese Aufgabe wird nach der Erfindung durch ein Messverfahren gemäß Anspruch 1 und durch ein Messsystem gemäß Anspruch 7 gelöst. Die Unteransprüche enthalten vorteilhafte Weiterbildungen.

Die wesentliche Idee der Erfindung liegt darin, Betriebsparameter wie etwa den Datendurchsatz, den CQI (Channel Quality Indicator) und die Anzahl der Retransmissions für ein Datenpaket jeweils in Abhängigkeit von der Sendeleistung bzw. dem TFCI (Transport Format Combination Identifier) darzustellen. Bei zunehmender Sendeleistung ist dabei theoretisch ein zunehmender CQI-Wert, ein zunehmender Datendurchsatz sowie eine abnehmende Anzahl von Retransmissions zu erwarten. Bei zunehmendem TFCI ist, gegebenenfalls abhängig von der Implementierung, ein abnehmender CQI-Wert zu erwarten, sowie eine zunehmende Anzahl von Retransmissions bei jeweils gleichen Kanalbedingungen. Der Datendurchsatz wird bis zu einem gewissen Wert steigen, bis die Retransmissions und die BER (Bit Error Rate) einen größeren Einfluss haben und den Datendurchsatz dadurch wieder verringern. Bei Abweichungen von der theoretisch bestimmten Ideallinie ergeben sich Aufschlüsse hinsichtlich fehlerhafter Anpassung (z.B. Clipping), nicht einwandfreier Hardware, fehlerhafter Implementierung und Resourceneffizienz (Performance). Die genannten Technologien und Parameter mit Relevanz für die Erfindung sind, über HSDPA hinaus, im übrigen auch Teil der UMTS LTE-Spezifikation. Daher ist die Erfindung nicht auf den Kontext von HSDPA beschränkt.

In einem Beispiel umfasst das Messverfahren die Schritte der Auswahl eines zu messenden Betriebsparameters; der Auswahl eines variablen Parameters; des Einstellens der Messparameter; des Messens der ausgewählten zu messenden Betriebsparameters in Abhängigkeit von dem ausgewählten variablen Parameter; sowie der Darstellung der Messergebnisse; wobei als variabler Parameter entweder die Sendeleistung oder der Transport Combination Format Indicator (TFCI) ausgewählt werden kann.

In einem weiteren Beispiel kann als zu messender Betriebsparameter der Durchsatz ausgewählt werden. Ferner kann als zu messender Betriebsparameter der Channel Quality Indicator (CQI) ausgewählt werden oder die Anzahl der notwendigen Retransmissions.

Ferner kann in einem weiteren Beispiel die Einstellung der Messparameter folgende Schritte beinhalten: die Einstellung eines Messintervalls; die Einstellung der Anzahl der Messpunkte im eingestellten Messintervall; sowie die Einstellung der Anzahl der Messungen pro Messpunkt.

Das Messverfahren kann ferner ein Konfigurieren der Darstellung der Messergebnisse umfassen. Hierbei kann das Konfigurieren die Auswahl einer oder mehrerer Darstellungsmöglichkeiten beinhalten, wobei die Varianz der gemessenen Werte für einen bestimmten Messpunkt; der Durchschnitt der gemessenen Werte für einen bestimmten Messpunkt; sowie der gültige Bereich der aufgenommenen Messergebnisse dargestellt werden kann.

Die Darstellung der Messergebnisse kann das Abtragen des Betriebsparameters über dem variablen Parameter beinhalten.

Die Durchführung der Messung kann das Variieren des ausgewählten variablen Parameters über den eingestellten Messbereich beinhalten. Der nicht ausgewählte variable Parameter kann dabei konstant gehalten werden.

Weitere Beispiele beinhalten ferner eine Software zur Durchführung eines Messverfahrens auf einem Computer sowie ein Speichermedium, auf welchem eine entsprechende Software aufgezeichnet ist.

Ein Messgerät gemäß eines Beispiels kann Mittel zur Auswahl eines zu messenden Betriebsparameters; Mittel zur Auswahl eines variablen Parameters; Mittel zum Einstellen der Messparameter; Mittel zum Messen der ausgewählten zu messenden Größe in Abhängigkeit von dem ausgewählten variablen Parameter; sowie eine Anzeigeeinheit zur Darstellung der Messergebnisse beinhalten, wobei als variabler Parameter entweder die Sendeleistung oder der Transport Combination Format Indicator (TFCI) ausgewählt werden kann.

Diese und weitere Eigenschaften, Aspekte und Vorteile der vorliegenden Erfindung werden ausführlicher in der nachfolgenden detaillierten Beschreibung dargestellt, unter Bezugnahme auf die anliegende Zeichnung, in welcher
- Fig. 1: eine schematische Darstellung der HDSPA-Technologie zeigt;
- Fig. 2: eine schematische Darstellung der Struktur des HS-DPCCH zeigt;
- Fig. 3: ein Flussdiagramm für ein Messverfahren gemäß einer Ausführungsform der vorliegenden Erfindung zeigt;
- Fig. 4a, b, c: Darstellungen gemessener CQI- und Durchsatz-Werte in Abhängigkeit von Sendeleistung und TFCI sind;
- Fig. 5a, b, c: Darstellungen gemessener Retransmissions (Wiederholungen) in Abhängigkeit von Sendeleistung und TFCI sind;
- Fig. 6: eine schematische Darstellung eines Messsystems mit einem Messgerät gemäß einer Ausführungsform der vorliegenden Erfindung zeigt; und
- Fig. 7: einen Dialog zur Parametrierung des Messgeräts aus Figur 6 zur Durchführung eines Messverfahrens gemäß einer Ausführungsform der Erfindung zeigt.

Fig. 3 zeigt ein Flussdiagramm für ein Messverfahren 300 gemäß einer Ausführungsform der vorliegenden Erfindung.

Zunächst kann in Schritt 310 ein zu messender Betriebsparameter ausgewählt werden. In einer Ausführungsform der Erfindung können als Messgrößen der Durchsatz, der vom Endgerät zurück gemeldete Channel Quality Indicator (Kanal Qualitäts Indikator) CQI oder die Anzahl der notwendigen Retransmissions (Wiederholungen) ausgewählt werden. Angemerkt sei an dieser Stelle, dass das Messverfahren gemäß der Erfindung nicht auf die drei genannten Betriebsparameter beschränkt ist, sondern diese nur als Beispiele angegeben werden. Weitere Betriebsparameter sind denkbar, die, gemessen in Verbindung mit den erfindungsgemäßen variablen Parametern Aufschlüsse über den Zustand und die Qualität der eingesetzten Geräte erlauben.

In Schritt 320 kann ein variabler Parameter ausgewählt werden. In der vorliegenden Ausführungsform können als variable Parameter entweder die Sendeleistung oder der Transport Format Combination Indicator (Transport Format Kombinations Indikator) ausgewählt werden. Die Reihenfolge, in welcher die Schritte 310 und 320 ausgeführt werden, ist hierbei bedeutungslos.

Im nächsten Schritt 330 können die Messparameter eingestellt werden. In einer Ausführungsform der Erfindung kann die Einstellung der Messparameter die Einstellung eines Messintervalls umfassen. Sie kann ferner die Einstellung der Anzahl der Messpunkte in einem gegebenen Messintervall, wie etwa in einem zuvor eingestellten Messintervall umfassen. Des weiteren ist es möglich, die Anzahl der Messungen pro Messpunkt einzustellen.

Dann wird in Schritt 340 der ausgewählte Betriebsparameter in Abhängigkeit von dem ausgewählten variablen Parameter gemessen, indem der ausgewählte variable Parameter in einem festgelegten Intervall variiert wird und an jedem gegebenen Messpunkt eine gegebene Anzahl von Messungen der ausgewählten Messgröße vorgenommen wird.

In Schritt 350 werden zuletzt die erzielten Messergebnisse dargestellt. In einer Ausführungsform der Erfindung beinhaltet die Darstellung der erzielten Messergebnisse das Abtragen der ausgewählten Messgröße über dem variablen Parameter in einem geeigneten Koordinatensystem.

In einer weiteren Ausführungsform der Erfindung ist die Art der Darstellung in einem zusätzlichen Verfahrensschritt konfigurierbar. Das Konfigurieren der Darstellung der Messergebnisse kann die Auswahl einer Darstellungsmöglichkeit aus mehreren umfassen. Zum Beispiel ist es gemäß der Erfindung möglich, die Varianz der gemessenen Werte für einen bestimmten Messpunkt darstellen zu lassen (Variance). Ferner ist es möglich, den Durchschnitt der gemessenen Werte für einen bestimmten Messpunkt darstellen zu lassen (Durchschnitt = Average). Zusätzlich kann auch ein gültiger Bereich für die aufgenommenen Messergebnisse dargestellt werden (Limit).

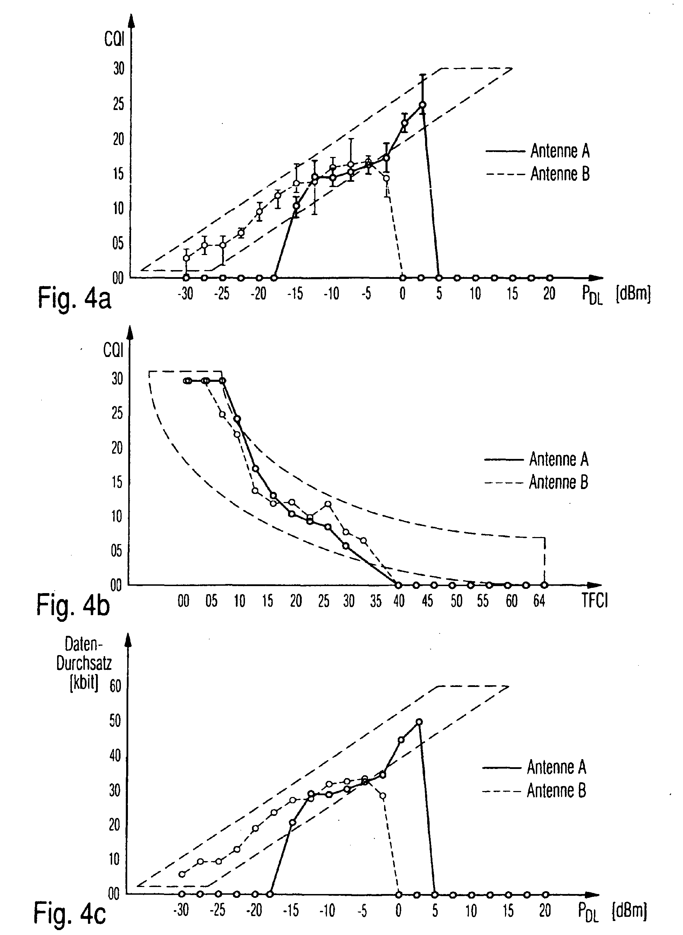

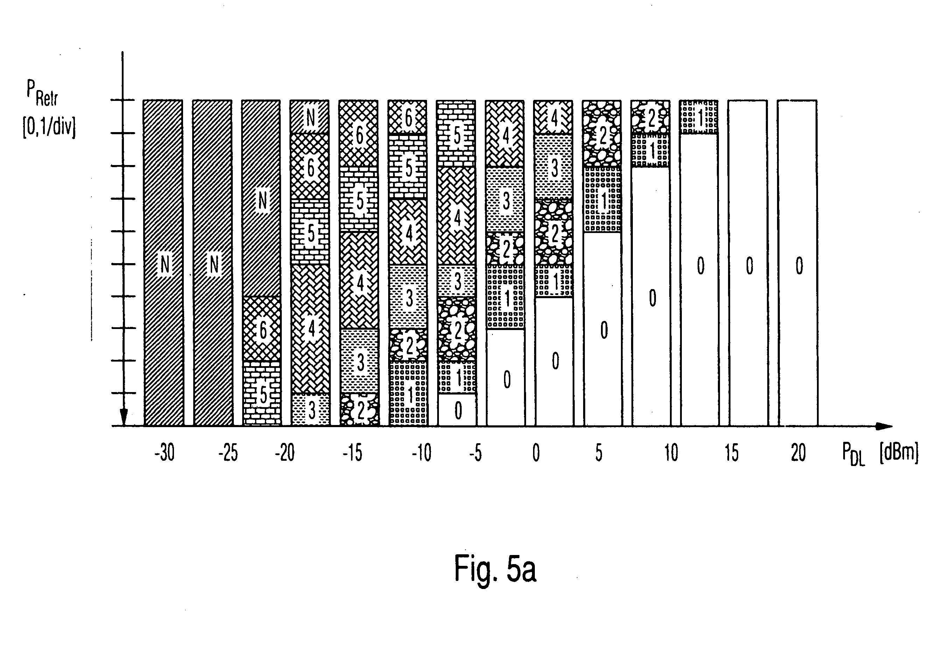

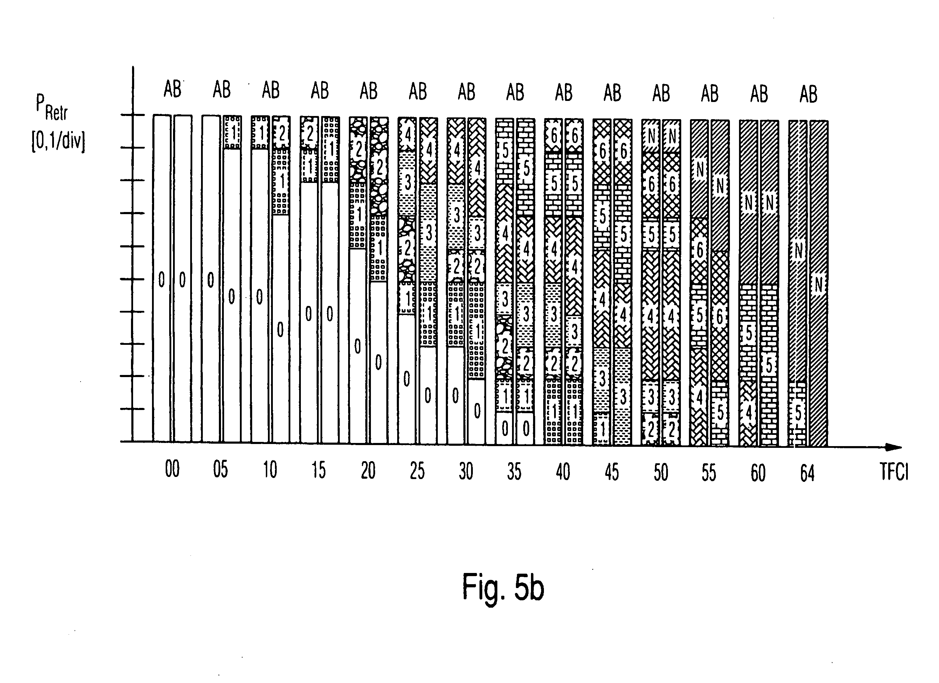

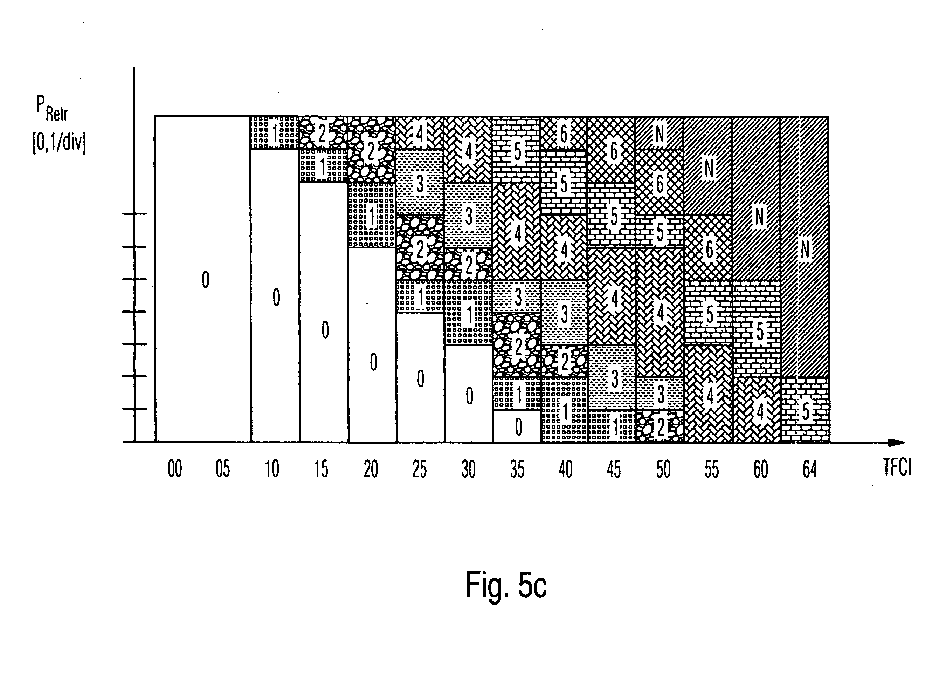

Ausführungsbeispiele der Darstellung von Messergebnissen werden in den folgenden Figuren 4a, 4b, 4c und 5a, 5b und 5c gezeigt.

Die Figuren 4a, b, und c zeigen Darstellungen gemessener CQI- und Durchsatz-Werte in Abhängigkeit von Sendeleistung und TFCI. Fig. 4a zeigt die weiter oben beschriebenen Darstellungsaspekte Variance, Average und Limit für den Betriebsparameter CQI, gemessen in Abhängigkeit von der Sendeleistung und abgetragen in einem zweidimensionalen Koordinatensystem. Die Varianz wird hierbei durch einen vertikalen Balken über jedem Messpunkt, begrenzt durch den jeweils größten und kleinsten Messwert je Messpunkt dargestellt. Der Durchschnitt wird durch einen runden Kreis dargestellt. Der gültige Bereich entspricht dem durch die gestrichelte Linie begrenzten Gebiet. In einer Ausführungsform der Erfindung können Messergebnisse außerhalb dieses Gebiets zur Verbesserung der Übersichtlichkeit und zur Unterstützung der Interpretation in einer besonderen Form oder Farbe dargestellt werden.

Fig. 4b zeigt die möglichen Darstellungsaspekte Average und Limit für den Betriebsparameter CQI, ähnlich Fig. 4a, gemessen in Abhängigkeit von dem Transport Format Combination Indicator (Transport Format Kombinations Indikator) TFCI. Fig. 4c zeigt schließlich den durchschnittlich gemessenen Datendurchsatz (in kbit), in ähnlicher Weise wie Figuren 4a und 4b.

Wie aus dem Diagramm hervorgeht, beziehen sich die Darstellungen jeweils auf ein System mit 2 Antennen A und B. Mit anderen Worten beziehen sich die Darstellungen auf ein 2x2 MIMO (Multiple-In-Multiple-Out)-System.

Die Figuren 5a, b und c zeigen Darstellungen der Anzahl von Retransmissions bzw. erneuten Übertragungen desselben Datenpakets, um dieses einem gegebenen Endgerät (User Equipment) UE fehlerfrei zuzustellen, abhängig von Sendeleistung und TFCI.

Die Balken zeigen den prozentualen Anteil der Datenpakete, die im ersten Versuch (0) bzw. in einem der folgenden Retransmissions (1-6) zugestellt werden konnten. Konnte ein Datenpaket selbst nach (im vorliegenden Beispiel) sechs Retransmissions nicht zugestellt werden, wird diese Tatsache im Diagramm mit (N) dargestellt. Die maximale Anzahl ist nicht auf sechs begrenzt, sondern kann irgend einen Wert entsprechend dem verwendeten Übertragungsverfahrens bzw. dessen Spezifikation annehmen.

Für MIMO im Falle von Spatial Multiplexing kann die Darstellung der Retransmissions auf die entsprechende Anzahl der Streams (zwei oder vier Antennen) erweitert werden (siehe Figur 5b).

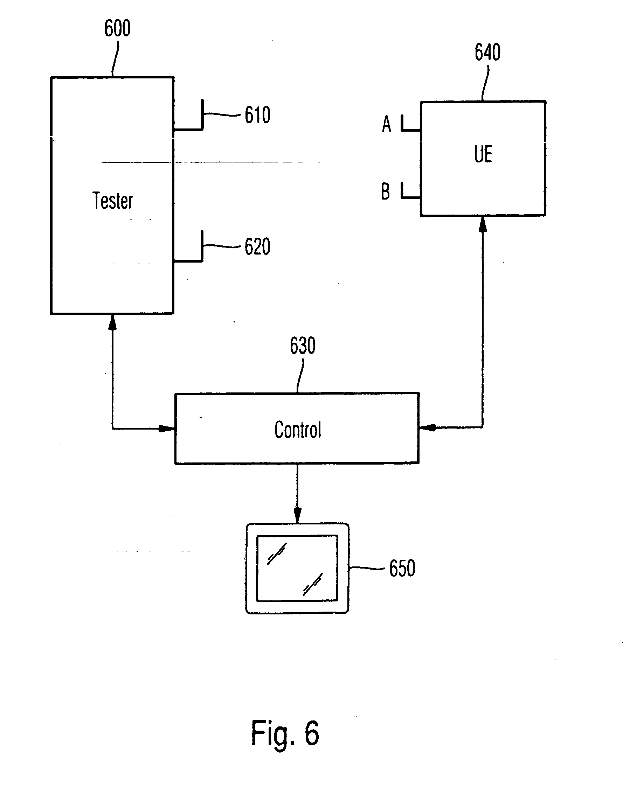

Fig. 6 zeigt eine Konfiguration eines erfindungsgemäßen Messsystems in welcher ein Messgerät 600 gemäß einer Ausführungsform der vorliegenden Erfindung zum Messen und Testen eines Endgerätes UE eingesetzt wird. Das Messgerät 600 besitzt eine oder mehrere Antennen 610, 620. Eine Steuerung 630 zur Steuerung des Messvorgangs ist mit dem Messgerät 600 und einem zu testenden Endgerät 640 verbunden. Das Endgerät 640 besitzt ebenfalls eine oder mehrere Antennen A, B. Steuerung ist mit einer Anzeigeeinheit 650 verbunden, die an oder im Messgerät 600 angeordnet sein kann.

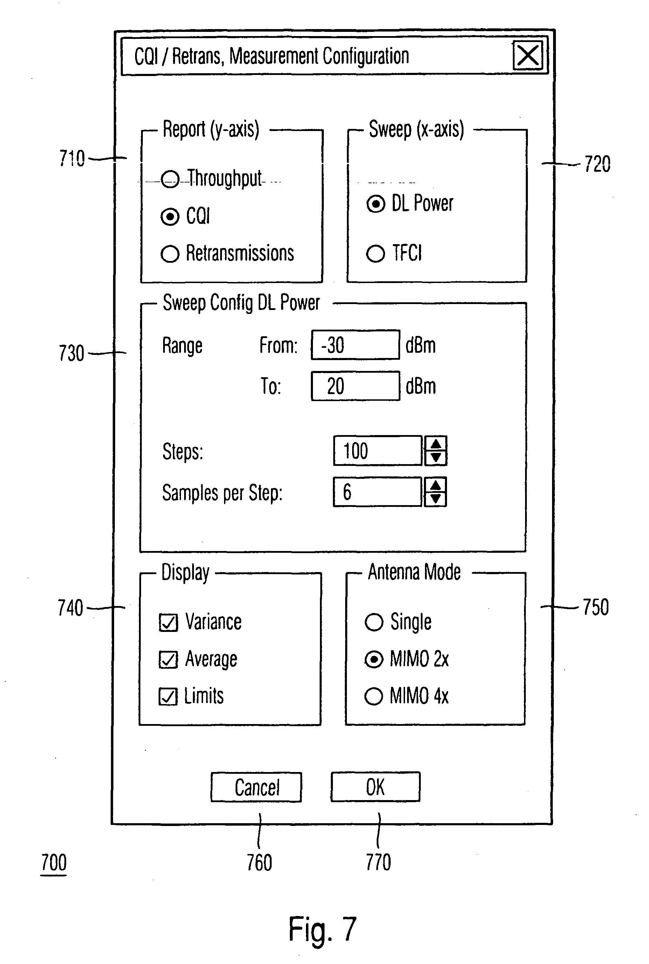

Fig. 7 zeigt einen Dialog 700 zur Einstellung der Parameter einer Messung. Der Dialog ist in mehrere Felder unterteilt, in welchen die einzelnen Einstellungen ausgewählt bzw. eingegeben werden können. In Feld 710 kann ein Betriebsparameter eingestellt werden, der gemessen werden soll. In der vorliegenden Ausführungsform bietet das Feld drei verschiedene Betriebsparameter an, den Durchsatz, den Channel Quality Indicator (CQI) und die Anzahl der Retransmissions oder Übertragungswiederholungen.

In Feld 720 kann ein variabler Parameter ausgewählt werden, der von dem Messgerät 600 bzw. der Steuerung 630 variiert werden soll, um eine Korrelation mit dem gemessenen Betriebsparameter zu ermitteln. In der vorliegenden Ausführungsform bietet das Feld zwei verschiedene variable Parameter an, die Sendeleistung und den sog. Transport Format Combination Indicator TFCI.

In Feld 730 können verschiedene Messparameter des Messgerätes 600 festgelegt werden. In der vorliegenden Ausführungsform bietet das Feld die Möglichkeit, den Messbereich, die Anzahl der Messpunkte und die Anzahl der Messungen pro Messpunkt festzulegen.

In Feld 740 können verschiedene Darstellungsoptionen ausgewählt werden, wobei die Auswahl kumulativ erfolgen kann. In der vorliegenden Ausführungsform besteht die Möglichkeit, die Varianz und den Durchschnitt der Messergebnisse pro Messpunkt sowie den Gültigkeitsbereich der Messergebnisse anzeigen zu lassen.

In Feld 750 kann schließlich alternativ festgelegt werden, ob die Messung im Einzelantennen-Betrieb (Single), im Zwei-Antennen-Betrieb (2x) oder im Vier-Antennen-Betrieb (4x) vorgenommen werden soll. Abgeschlossen wird der Dialog durch Betätigen des 'OK'-Schalters 770 bzw. des 'Cancel'-Schalters 760.

In dieser Anmeldung wurden folgende Abkürzungen verwendet:
- 3GPP: 3rd Generation Partnership Project
- ACK: Acknowledgement
- AMC: Adaptive Modulation and Coding
- BLER: Block Error Rate
- CQI: Channel Quality Information
- DPCH: Dedicated Physical Channel
- DTX: Discontinuous Transmission
- EVM: Error Vector Magnitude
- FP: Frame Protocol
- GPRS: General Packet Radio Service
- GSM: Global System for Mobile Communications
- HARQ: Hybrid Automatic Repeat Request
- HSDPA: High Speed Downlink Packet Access
- HS-DPCCH: High Speed Dedicated Physical Control Channel
- HS-(P)DSCH: High Speed (Physical) Downlink Shared Channel
- HS-SCCH: High Speed Shared Control Channel
- MAC: Medium Access Control
- MAC-hs: Medium Access Control - high speed
- NACK: Negative Acknowledgement
- NAS: Non-Access Stratum
- PHY: Physical Layer
- QPSK: Quadrature Phase Shift Keying
- QAM: Quadrature Amplitude Modulation
- RLC: Radio Link Control
- RRC: Radio Resource Control
- RV: Redundancy Version
- SF: Spreading Factor
- SML: Soft Metric Location
- TFCI: Transport Format Combination Indicator
- TS: Technical Specification
- TTCN: Tree and Tabular Combined Notation
- TTI: Transmission Time Interval
- UE: User Equipment
- UMTS: Universal Mobile Telecommunications System

## Patentansprüche

1. Messverfahren für ein Mobilfunksystem mit einem Hochgeschwindigkeits-Paketzugangs, HSDPA - Verfahren, umfassend die Schritte:
- Auswahl (310) eines zu messenden Betriebsparameters;
- Auswahl (320) eines variablen Parameters;
- Einstellen (330) der Messparameter, umfassend
- Einstellung des Messintervalls;
- Einstellung der Anzahl der Messpunkte im eingestellten Messintervall; sowie
- Einstellung der Anzahl der Messungen pro Messpunkt;
- Messen (340) des ausgewählten zu messenden Betriebsparameters in Abhängigkeit von dem ausgewählten variablen Parameter;
- Darstellung (350) der Messergebnisse,
wobei
als variabler Parameter der Transport Format Combination Identifier ausgewählt wird und als zu messender Betriebsparameter der Channel Quality Indicator, ,CQI, ausgewählt wird.

2. Messverfahren gemäß Anspruch 1,
das ferner den Schritt umfasst:
- Konfigurieren der Darstellung der Messergebnisse.

3. Messverfahren gemäß Anspruch 2,
wobei
der Schritt des Konfigurierens der Darstellung der Messergebnisse die Auswahl einer der folgenden Darstellungsmöglichkeiten beinhaltet:
- Varianz der Messergebnisse für einen bestimmten Messpunkt;
- Durchschnitt der Messergebnisse für einen bestimmten Messpunkt;
- Gültiger Bereich der aufgenommenen Messergebnisse.

4. Messverfahren gemäß einem der Ansprüche 2 oder 3,
wobei
die Darstellung der Messergebnisse beinhaltet:
- Abtragen der Messgröße über dem variablen Parameter.

5. Messverfahren gemäß Anspruch 1,
wobei
die Durchführung der Messung beinhaltet:
- Variieren des ausgewählten variablen Parameters über den eingestellten Messbereich.

6. Messverfahren gemäß Anspruch 5,
wobei der nicht ausgewählte variable Parameter konstant gehalten wird.

7. Messsystem für ein Mobilfunksystem mit einem Hochgeschwindigkeits-Paketzugangs HSDPA-, - Verfahren, umfassend:
- Mittel (630) zur Auswahl eines zu messenden Betriebsparameters;
- Mittel (630) zur Auswahl eines variablen Parameters (NodeB);
- Mittel (630) zur Einstellen der Messparameter, umfassend
- Mittel (630) zur Einstellung des Messintervalls;
- Mittel (630) zur Einstellung der Anzahl der Messpunkte im eingestellten Messintervall; sowie
- Mittel (630) zur Einstellung der Anzahl der Messungen pro Messpunkt;
- Mittel (600) zum Messen des ausgewählten zu messenden Betriebsparameters in Abhängigkeit von dem ausgewählten variablen Parameter;
- Anzeigeeinheit (650) zur Darstellung der Messergebnisse,
wobei
als variabler Parameter der Transport Format Combination Identifier auswählbar ist und als zu messender Betriebsparameter der Channel Quality Indicator , CQI, auswählbar ist.

8. Messsystem gemäß Anspruch 7, ferner umfassend:
- Mittel (630) zum Konfigurieren der Darstellung der Messergebnisse.

9. Messsystem gemäß Anspruch 8,
wobei
die Mittel zum Konfigurieren der Darstellung der Messergebnisse ferner Mittel zur Auswahl einer der folgenden Darstellungsmöglichkeiten beinhalten:
- Varianz der gemessenen Werte für einen bestimmten Messpunkt;
- Durchschnitt der gemessenen Werte für einen bestimmten Messpunkt;
- Gültiger Bereich der aufgenommenen Messergebnisse.

10. Messsystem gemäß einem der Ansprüche 8 oder 9,
wobei
die Darstellung der Messergebnisse die Darstellung eines Diagramms beinhaltet, in welchem der ausgewählte Betriebsparameter über dem variablen Parameter abgetragen ist.

11. Messsystem gemäß einem der Ansprüche 7 bis 10,
wobei
die Mittel zum Messen beinhalten:
- Mittel (630) zum Variieren des ausgewählten variablen Parameters über den eingestellten Messbereich.

12. Messsystem gemäß Anspruch 11,
wobei
der nicht ausgewählte variable Parameter konstant gehalten werden kann.

## Claims

1. Measurement method for a mobile telephone system with a high-speed data packet access HSDPA-method, comprising the following steps:
- selection (310) of an operating parameter to be measured;
- selection (320) of a variable parameter;
- setting (330) of the measurement parameters, comprising:
- setting of the measurement interval;
- setting of the number of test points within the set measurement interval; and
- setting of the number of measurements per test point;
- measurement (340) of the selected operating parameter to be measured dependent upon the selected variable parameter;
- display (350) of the measured results;
wherein
the Transport Format Combination Identifier is selected as the variable parameter, and the Channel Quality Indicator CQI is selected as the operating parameter to be measured.

2. Measurement method according to claim 1,
which further comprises the following step:
- configuring the display of the measured results.

3. Measurement method according to claim 2,
wherein
the step of configuring the display of the measured results comprises the selection of one of the following display options:
- variance of the measured results for a given test point;
- average of the measured results for a given test point;
- valid range of the recorded measured results.

4. Measurement method according to any one of claims 2 or 3,
wherein
the display of the measured results comprises:
- plotting the measured value against the variable parameter.

5. Measurement method according to claim 1,
wherein
the implementation of the test comprises:
- variation of the selected variable parameter against the set measurement range.

6. Measurement method according to claim 5,
wherein
the non-selected variable parameter is held constant.

7. Measurement system for a mobile telephone system with a high-speed data packet access HSDPA-method, comprising:
- means (630) for selecting an operating parameter to be measured;
- means (630) for selecting a variable parameter (Node B);
- means (630) for setting the measurement parameters, comprising:
- means (630) for setting the measurement interval;
- means (630) for setting the number of test points within the set measurement interval; and
- means (630) for setting the number of measurements per test point;
- means (600) for testing the selected operating parameter to be measured dependent upon the selected variable parameter;
- display unit (650) for presenting the measured results;
wherein
the Transport Format Combination Identifier can be selected as the variable parameter, and the Channel Quality Indicator CQI can be selected as the operating parameter to be measured.

8. Measurement system according to claim 7, further comprising:
- means (630) for configuring the display of the measured results.

9. Measurement system according to claim 8,
wherein
the means for configuring the display of the measured results further comprise means for selecting one of the following display options:
- variance of the measured values for a given test point;
- average of the measured values for a given test point;
- valid range of the recorded measured results.

10. Measurement system according to any one of claims 8 or 9,
wherein
the display of the measured results comprises the display of a diagram, in which the selected operating parameter is plotted against the variable parameter.

11. Measurement system according to any one of claims 7 to 10,
wherein
the means for testing comprise:
- means (630) for varying the selected variable parameter against the set measurement range.

12. Measurement system according to claim 11,
wherein
the non-selected variable parameter can be held constant.

## Revendications

1. Procédé de mesure pour un système de téléphonie mobile comportant un procédé d'accès de paquet à grande vitesse, HSDPA, comportant les étapes :
- de sélection (310) d'un paramètre de fonctionnement à mesurer ;
- de sélection (320) d'un paramètre variable ;
- d'ajustage (330) d'un paramètre de mesure, comportant
- d'ajustage de l'intervalle de mesure ;
- d'ajustage du nombre de points de mesure dans l'intervalle de mesure réglé ; et
- d'ajustage du nombre de mesures par point de mesure ;
- de mesure (340) du paramètre de fonctionnement à mesurer sélectionné en fonction du paramètre variable sélectionné ;
- d'affichage (350) des résultats de mesure,
dans lequel
l'identifiant de combinaison de format de transport est sélectionné en tant que paramètre variable et l'indicateur de qualité de canal, CQI, est sélectionné en tant que paramètre de fonctionnement à mesurer.

2. Procédé de mesure selon la revendication 1, qui comporte en outre l'étape consistant à :
- configurer l'affichage des résultats de mesure.

3. Procédé de mesure selon la revendication 2, dans lequel
l'étape de configuration de l'affichage des résultats de mesure comporte la sélection d'une des possibilités d'affichage suivantes :
- la variance des résultats de mesure pour un point de mesure déterminé ;
- la moyenne des résultats de mesure pour un point de mesure déterminé ;
- la plage valable des résultats de mesure.

4. Procédé de mesure selon l'une des revendications 2 ou 3, dans lequel
l'affichage des résultats de mesure comporte :
- la suppression des valeurs de mesure supérieures au paramètre variable.

5. Procédé de mesure selon la revendication 1, dans lequel
l'exécution de la mesure comporte :
- la variation du paramètre variable sélectionné dans la plage de mesure ajustée.

6. Procédé de mesure selon la revendication 5, dans lequel
le paramètre variable non sélectionné est maintenu constant.

7. Système de mesure pour un système de téléphonie mobile comportant un procédé d'accès de paquet à grande vitesse, HSDPA, comportant :
- un moyen (630) pour sélectionner un paramètre de fonctionnement à mesurer ;
- un moyen (630) pour sélectionner un paramètre variable (NodeB) ;
- un moyen (630) pour ajuster les paramètres de mesure, comportant
- un moyen (630) pour ajuster l'intervalle de mesure ;
- un moyen (630) pour ajuster le nombre de points de mesure dans l'intervalle de mesure ajusté; et
- un moyen (630) pour ajuster le nombre de mesures par point de mesure ;
- un moyen (600) pour mesurer le paramètre de fonctionnement à mesurer sélectionné conformément au paramètre variable sélectionné ;
- une unité d'affichage (650) pour afficher les résultats de mesure,
dans lequel
l'identifiant de combinaison de format de transport peut être sélectionné comme paramètre variable et l'indicateur de qualité de canal, CQI, peut être sélectionné en tant que paramètre de fonctionnement à mesurer.

8. Système de mesure selon la revendication 7, comportant en outre :
- un moyen (630) pour configurer l'affichage des résultats de mesure.

9. Système de mesure selon la revendication 8, dans lequel
le moyen pour configurer l'affichage des résultats de mesure comporte en outre des moyens pour sélectionner l'une des possibilités d'affichage suivantes :
- la variance des valeurs mesurées pour un point de mesure déterminé ;
- la moyenne des valeurs mesurées pour un point de mesure déterminé ;
- la plage valable des résultats de mesure enregistrés.

10. Système de mesure selon l'une des revendications 8 ou 9, dans lequel
l'affichage des résultats de mesure comporte l'affichage d'un diagramme, dans lequel le paramètre de fonctionnement sélectionné supérieur au paramètre variable est supprimé.

11. Système de mesure selon l'une des revendications 7 à 10, dans lequel
les moyens de mesure comportent :
- des moyens (630) pour faire varier le paramètre variable sélectionné dans la plage de mesure réglée.

12. Système de mesure selon la revendication 11, dans lequel
le paramètre variable non sélectionné peut être maintenu constant.
